# EUROPEAN PATENT SPECIFICATION

(11) **EP 1 274 100 B1**
(45) Date of publication and mention of the grant of the patent: **02.02.2011**
(21) Application number: 02253910.0
(22) Date of filing: 05.06.2002
(51) Int. Cl.: H01B 1/24

(54) **Electrically conducting fluoropolymer composition**
Elektrisch leitfähige Fluorpolymerzusammensetzung
Composition de fluoropolymères électriquement conductrice

(30) Priority: 02.07.2001 JP 2001200488
(43) Date of publication of application: 08.01.2003
(73) Proprietor: Dupont-Mitsui Fluorochemicals Company, Ltd., Chiyoda-ku Tokyo 101-0064 (JP)
(72) Inventor: Kondo, Shosaku, Shimizu city, Shizuoka-ken 424, (JP); Ishii, Kasuke, Shimizu city, Shizuoka-ken 424, (JP); Sato, Hajime, Shimizu city, Shizuoka-ken 424, (JP); Lee, Jeong Chang, Shimizu city, Shizuoka-ken 424, (JP)
(74) Representative: Matthews, Derek Peter

(56) References cited:
- EP-A- 0 038 713
- EP-A- 0 460 790
- US-A- 4 859 836
- US-A- 5 106 539

## Description

### FIELD OF THE INVENTION

The present invention relates to an improved electrically conducting fluoropolymer composition. It specifically relates to an electrically conducting, hereinafter, "conducting", fluoropolymer composition in which the conductivity is stable and the molded articles obtained therefrom have smooth and high precision surfaces, and which even when used in a wafer retention jig or in a solvent line of the type utilized in a semi-conductor manufacturing device, the electrically conducting carbon black particles will not be released into the device liquid to contaminate the device; and a process for the manufacture thereof.

### BACKGROUND OF THE INVENTION

Melt processible fluoropolymers such as tetrafluoroethylene/perfluoro(alkyl vinyl ether) (PFA), tetrafluoroethylene/hexafluoropropylene (FEP), tetrafluoroethylene/ethylene (ETFE) and the like, exhibit excellent heat resistance, chemical resistance, and non-stick properties. These fluoropolymers are also excellent electrical insulation materials, but they are required to be electrically conductive to be used as retainer jigs or tubes in integrated circuit (IC) and semi-conductor manufacturing devices, office automation (OA) appliance rolls exemplified by fixing rolls used in copy machines and printers and the like, or tube or belt materials.

Methods well known for imparting conducting or anti-static properties to fluoropolymers in general, call for adding conducting fibers, conducting carbon black, graphite, or the like. In particular, proposals include a composition of PFA with acetylene black as a conducting carbon black, mixed in a Henshel mixer (U.S. Patent No. 5,106,539); and compositions obtained by melt-mixing a terminal-group-fluorinated PFA with a conducting carbon black for reduced electrical resistance and a minimized increase in relative viscosity (Kokai H6-1902; Japanese Application Publication H3-38302), and the like.

US 4 859 836 also discloses carbon black dispersed in tetrafluoroethylene and perfluoro-alkyl vinyl ether used as a conductive polymer.

However, these fluoropolymer compositions that have been proposed have not yet shown satisfactory properties for use in electronic and electrical devices and parts applications that require the above-mentioned electrical conductivities in the above-mentioned applications.

The electrical resistance of conducting fluoropolymer compositions is known to vary not only with the type and amount of the conducting carbon black mixed therewith, but also greatly with the way the conducting carbon black is dispersed (Journal of Applied Polymer Science Vol. 69, p.193 (1998). However, with the mixing methods described in the patent specifications cited above call for mixing PFA particles with conducting carbon black in a Henshel mixer and then mixing in a melt extruder, or for forcing the PFA pellets to be melt mixed with conducting carbon black by the shearing force of the extruder, it has been difficult to disperse the mixed fine conducting carbon black powder uniformly in the PFA resin. In particular, the melt-mixing the conducting carbon black with the melt processible fluoropolymer in an extruder causes simultaneous dispersion of the conducting carbon black and destruction of the structure of the carbon black during the melt mixing state, making it extremely difficult for the composition to provide controlled stable conductivity. Because the conducting carbon black is dispersed non-uniformly, there is considerable variation in the conductivities and the physical properties within the same manufactured batch, or between batches, with the formation of agglomerates of non-uniformly dispersed carbon black and/or undispersed fluoropolymer, which has made it difficult to obtain a molded article with a smooth surface and also has made it impossible to obtain a shaped article product, which when used in a wafer holding jig or solvent line employed in semi-conductor manufacturing devices, would not release the conducting carbon black particles into the liquid of the device.

There is a need for conducting fluoropolymer composition with more uniformly dispersed conducting particles in the fluoropolymer so as to provide molded articles with smooth and high precision surfaces, which when used in a wafer holding jig or solvent line employed in semi-conductor manufacturing devices do not release conducting particles into the liquid of the device thereby contaminating the device.

### SUMMARY OF THE INVENTION

The present invention satisfies this need by providing a composition comprising acetylene black uniformly dispersed in a melt processible fluoropolymer powder whereby said melt processible fluoropolymer in said composition has two crystallization peaks in a DSC instrument when allowed to crystallize from a temperature of not less than its melting point at a cooling rate of 12°C/min; and the ratio of the crystallization peak heights (high temperature side peak/low temperature side peak) is 0.65 or greater; and/or the ratio of the high temperature side crystallization peak [high temperature side peak area/(high temperature side peak area + low temperature side peak area)] is 0.18 or greater.

### BRIEF DESCRIPTION OF THE DRAWINGS

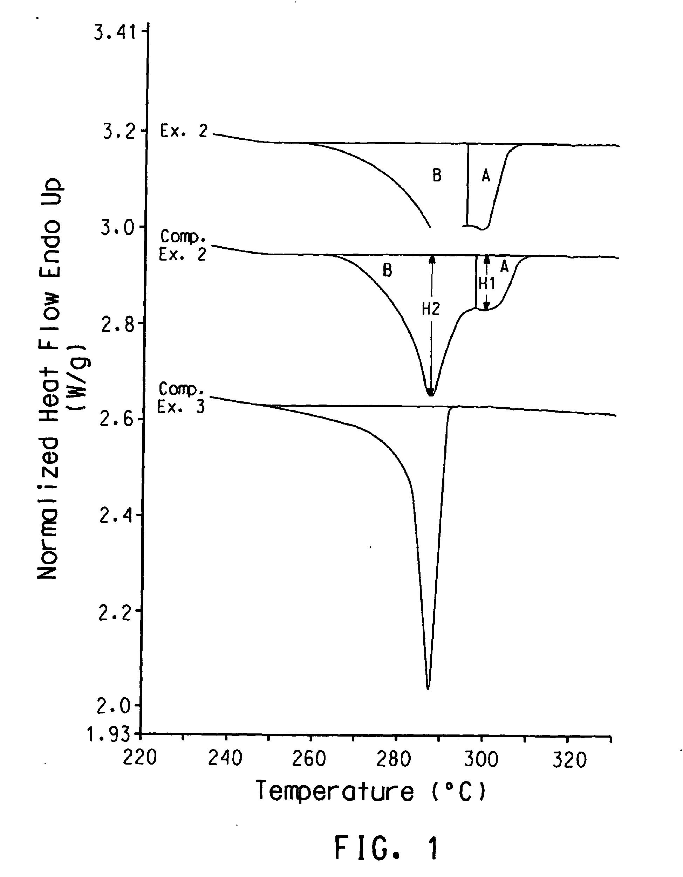

Figure 1 shows DSC crystallization peaks for the conducting fluoropolymer compositions for Example 2 and Comparative Examples 2 and 3.

### DETAILED DESCRIPTION

It has been discovered that it is possible to disperse conducting carbon black very uniformly in the fluoropolymer by pulverizing and mixing electrically conducting acetylene black, with a developed structure, with fluoropolymer fine powder using an impact shear type mixer with high speed rotating blades in the form of cutters, for example, a Cutter Mixer, as manufactured by Aikosha Seisakusho. The resultant composition exhibits a specific crystallization pattern, and has excellent characteristics in that it provides a stable electrical resistance, (conductivity), provides molded articles that have smooth and precision surfaces, and which, when used in a wafer holding jig or solvent line employed in the manufacture of semi-conductor devices, does not release conducting particles into the liquid of the device.

In general, it is difficult to determine whether conducting carbon black is uniformly dispersed in a conducting fluoropolymer. Although with a scanning electron microscope (SEM) or transmission electron microscope (TEM) it is possible to observe directly the carbon black dispersed in a conducting fluoropolymer composition, the high magnification permits one to view only a very localized area. This method cannot easily reveal the overall dispersion state for the carbon black.

The present inventors discovered that in making a conducting fluoropolymer composition by cutter mixer blending the carbon black with a fluoropolymer fine powder, when the uniformly dispersed carbon black fine powder is acetylene black it acts as a nucleation agent during crystallization of the fluoropolymer so that the comparison of the ratio of the crystallization of the fluoropolymer due to nucleation by the carbon black and that due to the normal crystal growth makes it possible to easily evaluate the dispersion of the conducting carbon black in the conducting fluoropolymer.

Accordingly, it is an object of this invention to mitigate the above prior art problems and to provide a conducting fluoropolymer composition which has a stable electrical resistance, provides a molded article therefrom with a smooth and precision surface condition, and will not release, when used in a wafer holding jig or solvent line employed in semi-conductor devices, conducting particles into the liquid of the device, thereby not contaminating the device.

That is, the present invention relates to an electrically conducting fluoropolymer composition, said composition comprising conducting acetylene black uniformly dispersed in a melt processible fluoropolymer powder whereby said electrically conducting fluoropolymer composition has two crystallization peaks in a differential scanning calorimeter (DSC) when allowed to crystallize from a temperature of not less than its melting point at a cooling rate of 12°C/min; and the ratio of the crystallization peak heights (high temperature side peak/low temperature side peak) is 0.65 or greater; and/or the ratio of the high temperature side crystallization peak area to the total area of the crystallization peaks [high temperature side peak area/(high temperature side peak area + low temperature side peak area)] is 0.18 or greater.

The fluoropolymer composition of the present invention is made by the process comprising pulverizing and mixing a melt processible fluoropolymer powder having an average particle size of not more than 10 µm with the electrically conducting carbon black using a cutter mixer with a cutter blade circumferential speed of 35 m/sec or greater. The melt processible fluoropolymer powder starting material is obtained by adding an electrolyte to an aqueous dispersion of melt processible fluoropolymer colloidal particles, coagulating the fluoropolymer colloidal particles, separating them from the aqueous medium by mechanical agitation, and drying. This aqueous dispersion is obtained by aqueous dispersion polymerization of the monomers providing the resultant fluoropolymer colloidal particles.

The conducting fluoropolymer composition of this invention comprises conducting acetylene black and a melt processible fluoropolymer powder, exhibiting the specific crystallization pattern described above when analyzed by DSC.

The melt processible fluoropolymers are polymers or copolymers of monomers selected from tetrafluoroethylene, chlorotrifluoroethylene, hexafluoropropylene, perfluoro(alkyl vinyl ether), vinylidene fluoride, and vinyl fluoride, or copolymers with such other monomers as ethylene. These polymers or copolymers typically contain at least about 35 weight % fluorine. More specifically, typical examples include tetrafluoroethylene/perfluoro(alkyl vinyl ether), (hereafter PFA), tetrafluoroethylene/hexafluoropropylene copolymer (FEP), tetrafluoroethylene/hexafluoropropylene/perfluoro(alkyl vinyl ether) (EPE), tetrafluoroethylene/ethylene (ETFE), polyvinylidene fluoride (PVDF), polychlorotrifluoroethylene (PCTFE), chlorotrifluoroethylene/ethylene (ECTFE) and the like. By copolymer is meant polymers made by polymerizing two or more monomers. Preferred are tetrafluoroethylene/perfluoro(alkyl vinyl ether) in which the perfluoro(alkyl vinyl ether) content is about 1-10% by weight, preferably about 3-8% by weight. The alkyl group of the perfluoro(alkyl vinyl ether) may be linear, branched, or cyclic, and may contain 1-10 carbon atoms and may include ether oxygens, preferably the alkyl group contains 1-5 carbon atoms, more preferably 1-3 carbon atoms, and most preferably 2 or 3 carbon atoms.

The term "melt-processible" means that the copolymer can be processed (i.e., fabricated into shaped articles such as films, fibers, tubes, wire coatings and the like) by conventional melt-extruding means. Melt-processibility requires that the melt viscosity at the processing temperature be no more than about 10⁶ Pa·s. Preferably it is in the range of about 10² to 10⁶ Pa·s, and most preferably about 10³ to 10⁵ Pa·s. The addition of carbon black results in a viscosity increase and this must be taken into consideration in formulating the compositions according to this invention.

The conducting carbon black used in the composition of this invention is acetylene black, which is in the form of a fine powder with well-developed structure. Other blacks, such as oil furnace black, thermal black, channel black, ketjen black, and the like, do not give the same beneficial results and do not give the ratio of crystallization peak heights and/or peak areas described above .

The well developed structure of the carbon black used in the present invention is a chain structure of primary particles linked together to form aggregates (fine powder) having an average particle size greater than 1 µm and usually greater than 2 µm. The primary particles smaller than that of other conducting carbon blacks and have of an average particle size of less than about 0.05 µm, typically about 0.04 µm. Acetylene black is the most notable carbon black having this structure. The pulverization and mixing together of the carbon black with a melt processible fluoropolymer fine powder with an average particle size of preferably 10 µm or less in a cutter mixer results in a fine and uniform dispersion with more uniformity for the acetylene black particles in the melt processible fluoropolymer fine powder. Therefore, the resultant shaped articles will have a surface state with better smoothness and better precision compared to those obtained by mixing with other conducting carbon blacks, thereby resulting in a conducting fluoropolymer composition which will not release carbon black, when used in a wafer holding jig or solvent line employed in semi-conductor devices, the conducting particles into the liquid of the device, thereby not contaminating the device.

The amount of conducting carbon black compounded, which will differ depending upon the goal conducting level, is about 1-15% by weight, preferably about 5-10% by weight of the powder composition.

In the conducting fluoropolymer composition of this invention, the composition has two crystallization peaks when allowed to crystallize from the melt in a DSC instrument from a temperature of the melting point of said melt processible fluoropolymer or higher, at a cooling rate of 12°C/min, wherein the crystallization peak height ratio (high temperature side peak/low temperature side peak) is in a range of about 0.65 or greater, preferably about 0.70-0.90 and/or the ratio of the high temperature side crystallization peak area [high temperature side peak area/(high temperature peak area + low temperature peak area)] is at least about 0.18, preferably about 0.20-0.27. The composition of this invention showing such a crystallization pattern is a conducting fluoropolymer composition which has a good dispersion state for the conducting carbon black, provides a stable electrical resistance, provides a molded article therefrom with a smooth and precision surface condition, and will not release the conducting particles into the liquid of the device, when used in a wafer holding jig or solvent line employed in semi-conductor devices.

The high temperature side crystallization peak in the present crystallization peak is due to nucleation of the fluoropolymer by the smaller aggregates of primary particles (disintegrated aggregates) of the conducting carbon black powder, while the low temperature side crystallization peak is a normal crystal growth peak. When conducting carbon black is uniformly dispersed, these two peaks are obtained.

The composition having the above crystallization pattern can be obtained by pulverizing and mixing a melt processible fluoropolymer powder having an average particle size of not more than 10 µm, the melt processible fluoropolymer being obtained by adding an electrolyte to an aqueous melt processible fluoropolymer dispersion, coagulating the fluoropolymer fine particles, separating it with mechanical agitation from the aqueous medium, and drying, along with an electrically conducting carbon black using a cutter mixer with the cutter blade circumferential speed at about 35 m/sec or greater.

The above aqueous melt processible fluoropolymer dispersion is preferably an aqueous dispersion obtained by emulsion polymerization, normally one having melt processible fluoropolymer colloidal particles with an average particle size from about 0.05 to about 0.2 µm at a concentration of about 1-75% by weight in water, preferably 5-60 wt %, more preferably 10-55 wt %, still more preferably 20-50 wt %, and most preferably 25-45 wt%, based on the total weight of the fluoropolymer and aqueous medium.

The electrolytes used for coagulating the fine colloidal particles of the melt processible fluoropolymer aqueous dispersion may be exemplified by inorganic or organic compounds soluble in water such as HCl, H₂SO₄, HNO₃, H₃PO₄, Na₂SO₄, MgCl₂, CaCl₂, sodium formate, potassium acetate, ammonium carbonate, and the like. From among these, it is preferred to use a compound, such as HCl and HNO₃, which will evaporate during drying of the melt processible fluoropolymer fine powder.

These electrolytes are preferably used at a rate of about 1-15% by weight, in particular, at a rate of about 1.5-10% by weight of the melt processible fluoropolymer; it is preferred to add them in the form of an aqueous solution to the aqueous melt processible fluoropolymer dispersion. If the amount of the electrolyte used is too small, it will take a long time to generate coagulated particles of the melt processible fluoropolymer, resulting in decreased productivity. Increasing the amount over that necessary level, which is not preferred, will not affect the formation of coagulated particles of the melt processible fluoropolymer, but will not be economical and will require more time for washing.

The device for generating coagulated particles of melt processible fluoropolymer is not particularly limited, but preferably is one which has a means for agitation capable of maintaining a circumferential speed of about 4m/sec, for example, one with a means such as propeller blades, turbine blades, paddle blades, oar type blades, horseshoe shaped blades, spiral blades, and the like along with a drainage means.

Addition of the desired amount of an electrolyte to the melt processible fluoropolymer aqueous dispersion in such a device along with agitation will cause the melt processible fluoropolymer colloidal fine particles to aggregate, giving aggregated particles which will separate from the aqueous medium and float. In this case, it is preferred to maintain the agitation speed at about 4 m/sec or greater. If the rate of agitation is too slow, it will take a long time to coagulate the melt processible fluoropolymer, in addition, it will make it difficult to remove water from the aggregated melt processible fluoropolymer. The agitation is carried out until the aggregated particles are separated from the aqueous medium.

The melt processible coagulated particles are treated after the aqueous medium has been drained off, optionally water-washed and then dried at a temperature not higher than the melting point of the melt processible fluoropolymer. The resultant melt processible fluoropolymer fine particles will normally have an average particle size of not more than about 10 µm, preferably in the range of about 1 to 10 µm and more preferaably about 2 to 6 µm Each fluoropolymer fine powder has a low aggregation force between the particles, which makes it suitable for disintegration and pulverization, although little disintegration or pulverization of the fine powder occurs as will be explained in the following paragraph.

In this invention, the resultant melt processible fluoropolymer fine powder and conducting acetylene black, are pulverized and the fine particles themselves are mixed using a cutter mixer with high speed rotating cutter knives. The cutter mixer for mixing such a fluoropolymer fine powder and carbon black particles is preferably a high speed rotation impact shear type mixer that causes pulverization and mixing as a result of the impact or shear forces from the high speed rotating cutter knives. The aggregates of primary carbon black particles are more subject to pulverizing than the fluoropolymer fine powder, resulting in the carbon black being pulverized to fine particle size aggregates, typically having an average particle size of less than 1 µm while the fluoropolymer fine powder undergoes very little particle size reduction. Thus, while some pulverizing occurs, an important result is the intimate mixing of the carbon black with and into the fluoropolymer fine powder wherein the carbon black becomes incorporated into the fluoropolymer fine powder. An example of a commercially available cutter mixer is the "Cutter Mixer", manufactured by Aikosha Seisakusho. The high-speed rotation impact shear mixer is different in its mixing influence on the dispersion state of the conducting carbon black from the conventional Henshel mixer, which uses simple blades and rotates and mixes at no more than 1500 rpm, in that it has sharp knives which rotate at a high speed, i.e. a cutter knife tip circumferential speed of at least 17 m/sec, with at least 35 m/sec being preferred for use in the present invention, thereby pulverizing and mixing the conducting carbon black fine powder with the melt processible fluoropolymer fine powder. Therefore, mixing conditions using the high speed rotation shear mixer preferably calls for a cutter knife revolving at more than 1500 rpm or at a circumferential rate of about 35 m/sec or higher, particularly in the range of about 3000-20000 rpm or at circumferential rate of about 70-115 m/sec.

The melt processible fluoropolymer composition obtained by pulverization and mixing with conducting acetylene black using the above cutter mixer and loading, has features, in addition to the uniform dispersion of the acetylene black in the melt processible fluoropolymer fine powder, in that the finely dispersed acetylene black in the melt processible fluoropolymer fine powder acts as a nucleating agent during crystallization of the fluoropolymer. In order for a crystalline polymer to crystallize from its melt, it is known that nuclei are first formed and from those nuclei crystals (or spherulites) grow. Materials are known that make finer, i.e. smaller, crystals in fluoropolymers. Fore example, metal sulfate salts have been used with polychlorotrifluororethylene (Kokai S49-5153); alkali metal salts (e.g. NaCl, KCl) with polyvinylidene fluoride (U.S. Patent No.3,719,644), as well as organic cyclic compounds (U.S. Patent No. 3,701,749). However, acetylene black, which is particularly suitable for use in this invention, has a nucleating effect greater than the materials taught in these patents, so that the heat of crystallization from nucleus formation is high enough to separate the nucleated crystals from those crystals formed without the influence of carbon black nucleation. This separation is seen in the separate crystallization peaks using a differential scanning calorimeter (DSC).

The conducting acetylene black, particles dispersed in the melt processible fluoropolymer act as a nucleating agent for the melt processible fluoropolymer, for example, PFA, so that the more uniformly the carbon black is dispersed, the greater the nucleation, which leads to a correlation between the dispersion state of the acetylene black and the heat of crystallization derived from the nucleated crystals. The greater the heat of crystallization due to carbon black nucleation, the better the dispersion state of the carbon black, thereby resulting in a conducting fluoropolymer powder composition from which shaped articles can be fabricated that have smoother and better precision surfaces than those obtained with other conducting carbon blacks. These articles, when used in a wafer holding jig or solvent line employed in semi-conductor devices, will not release the conducting particles into the liquid of the device, thereby not contaminating the device. Shaped articles obtained from the conducting fluoropolymer composition with better dispersed carbon black will have minimal variation in electrical resistance in the molded articles or between molded articles. The dispersion state of acetylene black and stability in electrical resistance can be evaluated by measuring the ratio of the heat of crystallization due to nucleation with respect to the total heat of crystallization obtained with a DSC (the area ratio A/(A+B) in Figure 1) or the ratio of the two crystallization peaks (Ratio of the two crystallization peak heights in Figure 1, H1/H2).

The powder composition exhibits the two crystallization peaks described above, having the indicated ratios of peak heights and areas. Articles made from this powder composition also exhibit these peaks whether or not melt fabrication is involved.

In the measurement by DSC of the heat of crystallization due to nucleation by acetylene black, the rate of crystallization (cooling rate) from the melt is important. If the crystallization rate is too fast, the peak from heat of crystallization due to nucleation by the carbon black (high temperature side peak (Figure 1-A) and that due to normal crystal growth (a low temperature side peak, which normally appears near the usual fluoropolymer crystallization peak), Figure 1-B) will partially overlap, i.e. they will not be cleanly separated. If the cooling rate is too slow, there will be a flatness between the two peaks, which makes it difficult to distinguish the boundary between the peaks. Therefore, in order to evaluate the dispersion state of the conducting carbon black in the melt processible fluoropolymer powder composition, the crystallization rate should be about 8-25°C/min, preferably about 10-15°C/min, more preferably at 12°C/min. At these rates, the two peaks can be separated.

In the initial stage of crystallization of the melt processible fluoropolymer, the carbon black plays a role of the nucleation agent, resulting in crystallization at a temperature higher than that for the pure melt processible fluoropolymer (Figure 1-A); but once nucleation is complete, the carbon black becomes a hindrance to the normal crystal growth of the melt processible fluoropolymers, so that the crystallization rate of the conducting fluoropolymer composition will be slower than for a pure melt processible fluoropolymer (the crystal growth will occur over a broader range so that the curve for crystallization due to crystal growth will be wider). Therefore, if the carbon black is not uniformly dispersed in the melt processible fluoropolymer, there will be a greater fraction of the pure melt processible fluoropolymer which is not hindered by the carbon black; accordingly, the normal crystallization peak height (Figure 1B-H2) in the crystallization growth rate will increase (the crystal growth occurs in a narrow temperature range, narrowing the width of the crystallization curve due to crystal growth). When comparable amounts of various carbon blacks are incorporated, the structured carbon black, such as is characteristic of acetylene black will have a greater heat of nucleation-related crystallization for the conducting fluoropolymer compared to that of the other conducting carbon blacks, and the height of the normal crystallization peak for crystal growth will be less. Thus, it is necessary to use carbon blacks like acetylene black also from the standpoint of better dispersion of the conducting carbon black.

In the conducting fluoropolymer powder composition of this invention, any other additives may be compounded. The additives can be compounded with the above cutter mixer during the pulverization-mixing time. Such additives include a powder or fibrous powder such as glass, graphite, alumina, mica, silicon carbide, boron nitride, titanium oxide, bismuth oxide, iron oxide, bronze, gold, silver, copper, and nickel, stainless steel, molybdenum disulfide, and the like.

The conducting fluoropolymer composition of this invention can be pelletized by melt extrusion, and the pellets further processed by extrusion molding, injection molding, transfer molding, melt-spinning, and the like. Obviously, without pelletization, the conducting fluoropolymer composition of this invention may be directly made into a molding compound or may be compacted from the composition using a compactor to make it easier to blend with the composition in the molding hopper, followed by melt molding. The conducting fluoropolymer composition obtained in this invention may be granulated for use in powder coating or rotolining or rotomolding.

The shaped article finally produced may be any molded article which requires conductivity, without limiting the present invention. Examples include tubes, sheeting, rods, fibers, gaskets, conductive jigs related to semi-conductor manufacture, and the like.

The conducting fluoropolymer composition of this invention has the conducting carbon black and the melt processible fluoropolymer fine powder more uniformly dispersed so that the molded article shows stable electrical resistance, gives a molded article with better surface smoothness and precision. The article does not release the conducting particles into the liquid of the device, even when used in a wafer holding jigs or solvent lines used in the device for manufacturing semi-conductors, thereby permitting the production of a conducting fluoropolymer composition product which does not pollute the device.

Since there is a correlation between the state of the acetylene black dispersion and the DSC-crystallization curves, the use of the DSC analytical method proposed by this invention permits a ready evaluation of the degree of carbon black dispersion.

The cutter mixer used in this invention which comprises pulverizing and mixing the acetylene black and the fluoropolymer fine powders themselves, can manufacture a conducting fluoropolymer composition in which the conducting carbon black and the melt processible fluoropolymer fine powder are uniformly dispersed independent of the melt viscosity of the melt processible fluoropolymer.

The composition of this invention can be melt molded by melt fabrication such as by extrusion molding, injection molding, transfer molding, and melt spinning and the like, where the type of the finely produced molded article is such that any molded article which require to be conductive can be manufactured, without particularly being limited in this invention, such as, tubes, sheets, rods, fibers, packing, semi-conductor related conducting jigs, and the like. Thus, the composition of the present invention can be in the form of the powder obtained by pulverizing/mixing, or can be in the form of compacted powder, or in the form of articles produced by melting of the powder, to produce intermediate articles such as pellets or articles in their final fabricated shape.

### EXAMPLES

Hereinafter, examples and comparative examples are shown below to specifically explain this present invention. The tetrafluoroethylene perfluoro(alkyl vinyl ether) (PFA) is a tetrafluoroethylene/ perfluoro(propyl vinyl ether). The conductive fluoropolymer compositions are measured using the following methods to determine temperatures of crystallization, heats of crystallization, the dispersion state of carbon black, average particle size, surface resistance, surface smoothness, and carbon black release tendencies of thin tubes made by extrusion, along with their average particle size and surface smoothness.
(a) Crystallization temperature and the heat of crystallization: These are measured using a Perkin Elmer differential scanning calorimeter, DSC model 7. The sample is heated to 360°C at a rate of 10°C/min., followed by holding for 5 minutes at 360°C to melt the crystals completely, and then cooling at a fixed speed (12°C/min) to 200°C; the minimum of the crystallization peak obtained for the low temperature side from the crystallization curve is determined as the crystallization temperature, from peak area of which the heat of crystallization is obtained (J/g).
   A fluoropolymer by itself or a composition obtained by mixing it with a conducting carbon black other than acetylene black gives a single crystallization peak, but a sample mixed with acetylene black gives two crystallization peaks wherein the acetylene black acts as a PFA nucleating agent, resulting in a nucleation-related high temperature side peak (Figure 1A) and a normal crystal growth low temperature side peak (Figure 1-B, appearing near the normal fluoropolymer crystallization peak temperature).
(b) Dispersion state of carbon black: since there is a correlation between the dispersion state of the acetylene black used in the Examples and the heat of crystallization due to nucleation, the state of acetylene black dispersion is evaluated in terms of the ratio of the nucleation crystallization heat (Figure 1 area A) with respect to the total heat of crystallization (Figure 1: area A + area B) as obtained with DSC, and the ratio of the nucleation crystallization peak height (Figure 1, height H1) to the normal crystallization peak height (H2 in Figure 1). For evaluating the dispersion state of carbon black, the heat of crystallization and the crystallization peak height are used as obtained from crystallization peaks as the material is allowed to crystallize at a decreasing temperature rate of 12°C/min in the DSC of the sample. Sometimes the crystallization peaks by DSC are not completely resolved. They may overlap, in which case the local minimum between the two peaks is taken as the dividing point and a vertical line from the minimum to the baseline is taken as the border between the two peaks. When the higher temperature peak is a shoulder on the larger normal crystallization peak, the inflection point is taken as the dividing point and a vertical line from the inflection point to the baseline is taken as the border between the two peaks. The length of the vertical line is taken as H1.
(c) Average Particle Size: The average particle size of a conducting fluoropolymer composition from the PFA fine powder obtained by aggregation and granulation from an aqueous fluoropolymer dispersion and that obtained by mixing and pulverization in a high speed rotation shear mixer (Cutter Mixer) is measured with a laser diffraction particle size distribution measurement apparatus from Helos & Rodos, Sympatec GmbH, Germany.
(d) Surface resistance: a conducting fluoropolymer composition obtained by pulverization and mixing with a Cutter Mixer is then used to fabricate a tube 50 µm outer diameter, 40 mm inner diameter using a 30 mm diameter single screw extruder; the resultant tube surface is brought into contact with a Surface Resistance Instrument (HIRESTA IP) manufactured by Mitsubishi Yuka Co., with an HR100 probe to apply 10V (DC) for 10 seconds and measuring the value on the meter which is reported as the surface resistance (ohm/Sq or ohm/□) (JIS K6911 or ASTM D 257). The measurements are made at five arbitrarily selected spots and an average is reported as the measured value.
(e) Surface smoothness:
   The surface of the above tube sample is measured using a probe surface roughness instrument (Tokyo Seimitsu, Surfcom 575A-3D). The measurements are made on any desired five places and an average is reported as the measured value.
(f) Liberation of carbon black (release): The above tube sample is dipped 24 hours in hydrochloric acid, followed by water washing and pressing a white filter paper onto the surface and scratching the surface with the finger over the filter paper to compare the extent of transferring carbon black to the filter paper for evaluation of carbon black release. O: no deposition of carbon black on the filter paper; Δ: a slight transfer of carbon black to white paper; x [obvious] deposition on visual inspection.

### Example 1

An aqueous 30 wt% PFA dispersion (average particle size 0.2µm, melting point 309°C, PPVE content 3.5% by weight) obtained by emulsion polymerization, 60 kg, is placed in an agitation tank (100 liter capacity) equipped with an agitation shaft equipped with a down flow type 6-blade propeller and a draining means, followed by adding 500 g of 60% aqueous nitric acid with agitation at 300 rpm. The mixture is further agitated 10 minutes at 300 rpm to coagulate the aqueous dispersion, which is then stirred for 20 minutes at 450 rpm to let the fine coagulated PFA particles rise to the top of the aqueous medium thereby separating them from the aqueous medium.

Then the aqueous polymerization medium is drained from the stirred tank, water is added to water wash the PFA coagulated particles, and it is allowed to pass through a stainless steel screen (opening 100-150 µm). The PFA aggregated particles remaining on the screen are dried for 24 hours at 160°C to obtain a PFA fine powder. The resulting PFA fine powder had an average particle size of 6 µm as measured for particle size using a centrifugal sedimentation type particle size distribution instrument (Shimadzu Seisakusho SA-CP4L).

14 kg of the PFA fine powder and 1.05 kg of acetylene black (F-35X, made by Denki Kagaku Kogyo KK and having a low amount of impurities as follows (ppm): Fe 0.8, Si 0.6, Al 0.5, S 2, Na <0.5, Cl 2) is fed to an impact shear mixer (Cutter Mixer, made by Aikosha Seisakusho SC-3200S) with high speed rotation blades in the form of a cutter, and pulverized and mixed at 3600 rpm (circumferential speed of 75.3 m/sec) for 10 minutes thereby producing a conducting fluoropolymer powder composition. The resultant conducting fluoropolymer composition is measured using the above particle size distribution instrument, which shows an average particle size of 4.5 µm. Table 1 shows the results of measuring crystallization steps with a DSC of the resultant conducting fluoropolymer powder composition.

### Example 2

Procedures identical to those of Example 1 are used except for extending the Cutter Mixer pulverization-mixing times to 20 minutes to prepare a conducting fluoropolymer powder composition. The results are given in Table 1. Table 1 shows the results of measuring crystallization by DSC of the powder composition. Figure 1 shows the DSC crystallization curve for the conducting fluoropolymer powder composition.

### Example 3

Procedures identical to those of Example 1 are used except for the Cutter Mixer pulverization mixing times being 30 minutes to prepare a conducting fluoropolymer powder composition. The results are given in Table 1. Table 1 shows the results of measuring crystallization by DSC of the powder composition.

### Example 4

Procedures identical to those of Example 1 are used except for the Cutter Mixer pulverization-mixing time being 40 minutes to prepare a conducting fluoropolymer powder composition. The results are given in Table 1. Table 1 shows the results of measuring crystallization by DSC of the powder composition.

### Comparative Example 1

Procedures identical to those of Example 1 are used except for the Cutter Mixer pulverization-mixing time being 5 minutes to prepare a conducting fluoropolymer powder composition. The results are given in Table 1. Table 1 shows the results of measuring crystallization by DSC of the powder composition.

### Comparative Example 2

Instead of the above PFA fine powder, 60 kg of a 30% by weight aqueous PFA dispersion prepared by emulsion polymerization is placed in an agitating tank (100 liter) having an agitating shaft equipped with a down flow type 6-blade propeller and a draining means, stirred at 300 rpm (circumferential speed 4.7 m/sec), followed by adding 500 g of 60% nitric acid, and further stirred 10 minutes at 300 rpm; when the aqueous dispersion is coagulated, 9 kg of Vertrel XFA (Mitsui-DuPont Fluorochemical Company), 9 kg is added and stirred 20 minutes to carry out a solvent granulation to give PFA coagulant particles with an average particle size of 200 µm, which are then pulverized and mixed in a Cutter Mixer; otherwise, the same procedure as that of Example 1 is used to prepare a conducting fluoropolymer powder composition. Table 1 and Figure 1 show the results of measuring DSC and a crystallization curve for the powder composition.

### Comparative Example 3

Example 1 is repeated except for replacing the acetylene black with Ketjen black (Ketjen EC; impurities: Fe 53, Si 12, Al 10, S 810, Na 17, Cl 4), 0.49 kg, and changing the Cutter mixer pulverization-mixing time to 20 minutes to obtain a conducting fluoropolymer powder composition. The Ketjen black has a more developed structure than acetylene black so that amount added is reduced to 0.49 kg. The results are given in Table 1 and Figure 1.

### Comparative Example 4

The fluoropolymer/acetylene black composition of Example 1 is mixed for 20 minutes in a Henshel mixer. DSC analysis of the resulting material gives a crystallization curve in which two peaks are not well-separated, similar to Example 2 in Figure 1. The crystallization curve resembles the curve of Comparative Example 2 in Figure 1. Results are summarized in Table 1.

**Table 1**

| | Comparative Example | Examples | | | | Comparative Examples | | |
|---|---|---|---|---|---|---|---|---|
| | 1 | 1 | 2 | 3 | 4 | 2 | 3 | 4 |
| PFA (kg) | 14 | 14 | 14 | 14 | 14 | 14 | 14 | 14 |
| Acetylene black (kg) | 1.05 | 1.05 | 1.05 | 1.05 | 1.05 | 1.05 | | 1.05 |
| Ketjen black (kg) | | | | | | | 0.49 | |
| Cutter Mixer mixing time (min) | 5 | 10 | 20 | 30 | 40 | 20 | 20 | |
| Henshel Mixer mixing time (min) | | | | | | | | 20 |
| Heat of nucleation crystallization (A)(J/g) | 3.80 | 4.60 | 5.00 | 5.68 | 5.64 | 3.81 | 0 | 3.60 |
| Heat of total crystallization (A+B)(J/g) | 23.0 | 25.5 | 24.8 | 24.6 | 23.5 | 24.6 | 21.9 | 24.4 |
| (A)/(A+B) | 0.165 | 0.180 | 0.202 | 0.231 | 0.240 | 0.155 | 0 | 0.148 |
| H1/H2 | 0.608 | 0.639 | 0.689 | 0.720 | 0.738 | 0.388 | 0 | 0.380 |
| Crystallization Peak Temperature (°C) | 286.1 | 286.5 | 286.4 | 286.4 | 286.5 | 286.2 | 287.8 | 286.1 |

The results given in Table 1 show that the longer the Cutter Mixer pulverization-mixing time, the greater the ratio of the nucleation heat of crystallization to the normal heat of crystallization (Figure 1 area A) or the ratio of the nucleation heat of crystallization to the total heat of crystallization (Figure 1, area A + area B) as measured by DSC, and the greater the ratio of the nucleation crystallization peak height to the crystal growth peak height (H1/H2). Therefore, there is a correlation between the dispersion state of acetylene black and the nucleation heat of crystallization obtained by DSC, indicating that the greater the ratio of the nucleation heat of crystallization to the total heat of crystallization (Figure 1 area A + area B), or the greater the ratio of the nucleation crystallization peak to the crystal growth peak height (H1/H2), the more uniform is the dispersion of acetylene black in the PFA fine powder. (Examples 1-4)

The results shown in Table 1 and Figure 1 show that a sample prepared (Comparative Example 2) by replacing the PFA fine powder having an average particle size of 6 µm prepared by non-solvent granulation with high speed stirring, with a PFA coagulated particulate material having an average particle size of 200 µm obtained by solvent granulation, has a poor acetylene black dispersion state, which reduced the ratio of the nucleation heat of crystallization and the ratio of the nucleation crystallization peak to crystal growth peak (H1/H2).

A sample prepared with Ketjen black (Comparative Example 3) in place of acetylene black shows no crystallization peak for nucleation because Ketjen black has no nucleus forming effect. Since there is essentially no change in crystallization peak temperature by crystal growth in every sample (Figure 1 area B peak), this suggests that area A of Figure 1 is the crystallization due to nucleation.

A sample prepared from PFA and acetylene black in a Henshel mixer (Comparative Example 4) has poor acetylene black dispersion as shown by a A/(A+B) and H1/H2 ratios that are low.

The conducting fluoropolymer powder compositions prepared in examples of this invention and comparative examples are extruded through a twin screw extruder (manufactured by Toyo Seiki Seisakusho, Laboplatomil 30C150) at 370°C at 20 rpm to generate pellets, which are then used to prepare a tube 50 mm outer diameter, 40 mm inner diameter with a 30 mm single screw extruder. Table 2 shows the result of evaluating the resultant tube.

**Table 2**

| | Comparative Example | Examples | | | | Comparative Example | | |
|---|---|---|---|---|---|---|---|---|
| | 1 | 1 | 2 | 3 | 4 | 2 | 3 | 4 |
| PFA (kg) | 14 | 14 | 14 | 14 | 14 | 14 | 14 | 14 |
| Acetylene black (kg) | 1.05 | 1.05 | 1.05 | 1.05 | 1.05 | 1.05 | | 1.05 |
| Ketjen black (kg) | | | | | | | 0.49 | |
| Cutter mixer mixing time (min) | 5 | 10 | 20 | 30 | 40 | 20 | 20 | |
| Henshel mixer mixing time (min) | | | | | | | | 20 |
| Surface smoothness (µm) | 0.15 | 0.12 | 0.10 | 0.10 | 0.09 | 0.25 | 0.35 | 0.28 |
| Average surface resistance (Ω/Sq) | 5x10⁶ | 1x10⁶ | 8x10⁵ | 3x10⁵ | 5x10⁵ | 5x10⁸ | 7x10⁴ | 9x10⁸ |
| Carbon black release tendency | Δ | ○ | ○ | ○ | ○ | Δ | ○ | Δ |

The results shown in Table 2 suggest that conducting fluoropolymer tubes molded using conducting fluoropolymer composition obtained by the process of this invention show more uniform dispersion of the conducting carbon black compared to conducting fluoropolymer tubes (Comparative Examples 1-3) using conducting fluoropolymer powder compositions obtained by other methods; they also show reduced variation in surface resistance and excellent surface smoothness. Since the conducting particles are not released into the solution, this invention provides a conducting fluoropolymer composition which does not pollute the device.

## Claims

1. An electrically conducting fluoropolymer composition, said composition comprising conducting acetylene black uniformly dispersed in a melt processible - fluoropolymer whereby said melt processible fluoropolymer has two crystallization peaks in a differential scanning calorimeter when allowed to crystallize from a temperature of not less than its melting point at a cooling rate of 12°C/min.; and the ratio of the crystallization peak heights (high temperature side peak/low temperature side peak) is 0.65 or greater; and/or
the ratio of the high temperature side crystallization peak areas [high temperature side peak area/(high temperature side peak area + low temperature side peak area)] is 0.18 or greater.

2. An electrically conducting fluoropolymer composition as claimed in Claim 1, wherein the high temperature side crystallization peak is a crystallization peak associated with nucleation and the low temperature side crystallization peak is a normal crystal growth peak.

3. An electrically conducting fluoropolymer composition as claimed in Claim 1 or Claim 2, said composition containing about 1-15% by weight of an electrically conducting acetylene black

4. An electrically conducting fluoropolymer composition as claimed in Claims 1-3, wherein the melt processible fluoropolymer is a copolymer of tetrafluoroethylene and a perfluoro(alkyl vinyl ether).

5. The composition of claim 1 in the form of a powder.

6. The composition of claim 1 in the form of a melt fabricated article.

7. The composition of claim 6 wherein said article is pellets.

## Patentansprüche

1. Elektrisch leitfähige Fluorpolymerzusammensetzung, wobei die Zusammensetzung leitfähigen Acetylenruß umfasst, der gleichmäßig in einem schmelzverarbeitbaren Fluorpolymer dispergiert ist, wobei das schmelzverarbeitbare Fluorpolymer in einem Differential-Scanning-Kalorimeter zwei Kristallisätionspeaks aufweist, wenn man es sich ausgehend von einer Temperatur von nicht weniger als seinem Schmelzpunkt bei einer Kühlrate von 12 °C/min auskristallisieren lässt; und das Verhältnis der Kristallisationspeakhöhen (Hochtemperaturseitenpeak/Niedertemperaturseitenpeak) 0,65 oder mehr beträgt; und/oder
das Verhältnis der Hochtemperatur-Seitenkristallisationspeakbereiche [Bereich des Hochtemperaturseitenpeaks/Bereich des Hochtemperaturseitenpeaks + Bereich des Niedertemperaturseitenpeaks)] 0,18 oder mehr beträgt.

2. Elektrisch leitfähige Fluorpolymerzusammensetzung nach Anspruch 1, wobei der Hochtemperatur-Seitenkristallisationspeak ein Kristallisationspeak ist, der mit der Keimbildung verbunden ist, und der Niedertemperatur-Seitenkristallisationspeak ein normaler Kristallwachstumspeak ist.

3. Elektrisch leitfähige Fluorpolymerzusammensetzung nach Anspruch 1 oder Anspruch 2, wobei die Zusammensetzung etwa 1-15 Gew.-% eines elektrisch leitfähigen Acetylenrußes enthält.

4. Elektrisch leitfähige Fluorpolymerzusammensetzung nach den Ansprüchen 1-3, wobei das schmelzverarbeitbare Fluorpolymer ein Copolymer von Tetrafluorethylen und einem Perfluor(alkylvinylether) ist.

5. Zusammensetzung nach Anspruch 1 in Form eines Pulvers.

6. Zusammensetzung nach Anspruch 1 in Form eines schmelzfabriziert Gebrauchsartikels.

7. Zusammensetzung nach Anspruch 6, wobei der Gebrauchsartikel aus Kügelchen besteht.

## Revendications

1. Composition de fluoropolymère conduisant l'électricité, ladite composition comprenant un noir d'acétylène conducteur dispersé uniformément dans un fluoropolymère pouvant être traité à l'état fondu, moyennant quoi ledit fluoropolymère pouvant être traité à l'état fondu présente deux pics de cristallisation dans un calorimètre différentiel à balayage lorsqu'on le laisse cristalliser à partir d'une température non inférieure à son point de fusion à une vitesse de refroidissement de 12°C/min; et le rapport des hauteurs des pics de cristallisation (pic du côté des hautes températures/pic du côté des basses températures) est de 0,65 ou plus; et/ou
le rapport de l'aire du pic de cristallisation du côté des hautes températures [aire du pic du côté des hautes températures/(aire du pic du côté des hautes températures + aire du pic du côté des basses températures)] est de 0,18 ou plus.

2. Composition de fluoropolymère conduisant l'électricité selon la revendication 1, dans laquelle le pic de cristallisation du côté des hautes températures est un pic de cristallisation associé à une nucléation et le pic de cristallisation du côté des basses températures est un pic de croissance cristalline normale.

3. Composition de fluoropolymère conduisant l'électricité selon la revendication 1 ou la revendication 2, ladite composition contenant environ 1-15% en poids d'un noir d'acétylène conduisant l'électricité.

4. Composition de fluoropolymère conduisant l'électricité selon les revendications 1-3, dans laquelle le fluoropolymère pouvant être traité à l'état fondu est un copolymère de tétrafluoroéthylène et d'un perfluoro(alkylvinyléther).

5. Composition selon la revendication 1 sous la forme d'une poudre.

6. Composition selon la revendication 1 sous la forme d'un article fabriqué à l'état fondu.

7. Composition selon la revendication 6 dans laquelle ledit article consiste en pastilles.
